Europäisches Patentamt

European Patent Office

Office européen des brevets

(11) Publication number: **0 144 643**
**B1**

(12) **EUROPEAN PATENT SPECIFICATION**

(45) Date of publication of patent specification: **23.12.87**

(51) Int. Cl.⁴: **C 08 L 21/00,** C 08 K 5/33,
B 60 C 21/08

(21) Application number: **84112465.4**

(22) Date of filing: **16.10.84**

(54) Accelerator system for peroxide based curing systems.

(30) Priority: **09.11.83 US 549946**

(43) Date of publication of application:
**19.06.85 Bulletin 85/25**

(45) Publication of the grant of the patent:
**23.12.87 Bulletin 87/52**

(84) Designated Contracting States:
**BE DE FR GB IT LU SE**

(56) References cited:
**FR-A-1 479 596**
**GB-A-2 082 191**

**CHEMICAL ABSTRACTS, vol. 96, no. 4, January
25, 1982, page 50, no. 21120m, COLUMBUS,
OHIO (US).**

(73) Proprietor: **THE FIRESTONE TIRE & RUBBER
COMPANY**
**1200 Firestone Parkway**
**Akron, Ohio 44317 (US)**

(72) Inventor: **DeTrano, Mario N.**
**7549 Celina St. N.W.**
**Massillon Ohio 44646 (US)**
Inventor: **Hergenrother, William L.**
**195 Dorchester Road**
**Akron, OH 44313 (US)**
Inventor: **Diehl, Donald B.**
**791 E. Tuscarawas Ave.**
**Barberton Ohio 44203 (US)**

(74) Representative: **Kraus, Walter, Dr. et al
Patentanwälte Kraus, Weisert & Partner
Thomas-Wimmer-Ring 15
D-8000 München 22 (DE)**

Courier Press, Leamington Spa, England.

# 0 144 643

**Description**

The present invention is directed to a curing system for curing an elastomer composition comprised of at least one elastomeric synthetic or natural polymer containing at least 0.1 mole % unsaturation.

Proper dispersion and distribution of curing agents in a rubber stock are desirable in order to obtain an efficient and homogeneous cure. Although sufficient dispersion can usually be achieved with liquid curing agents, the use of such liquid agent is often inconvenient because of their instability and tendency to phase separate. While these problems can be avoided through use of solid curing agents, it is often essential to adequately subdivide and disperse such solid agents particularly when they are not appreciably soluble in the rubber stock. Exemplary solid curing agents for use with butyl rubber stock include p-benzoquinonedioxime and benzoyl peroxide on excipient bases such as calcium phosphate and flour. When such curing systems are used in butyl rubber systems and heated to mild temperatures, below 50°C, the butyl rubber undergoes an excessively slow cure which results in a product having a low cross-link density. Therefore, it is often desirable to use an accelerator with such solid dispersed systems.

GB—2 082 191 describes a puncture sealant composition for tyres, said composition having a fast cure rate.

It is the object of the present invention to provide selected quinoid/peroxide based curing systems which are capable of yielding fast cure rates at mild temperatures particularly in the presence of selected accelerators.

The curing system should be capable of yielding fast cures in certain rubber stocks under mild temperature conditions. Therefore the main advantages of the utilization of such a curing system would be as follows: (1) energy consumption can be minimized by effecting cure at mild instead of high temperature; (2) fast cure cycles are obtained which can translate into faster production times thus resulting in a more efficient, profitable commercial operation; and (3) the use of mild temperature curing can enable rubber parts to be produced which have physical properties which are preserved. These properties might have been adversely affected in the past when the parts were subjected to high temperature curing conditions.

It is a further object of the present invention to utilize the selected quinoid/peroxide based curing systems in the preparation of a puncture-sealing layer of puncture-sealing tyres.

It has now been discovered that filled elastomers can be cured at low temperatures utilizing a quinoid/peroxide curing system in the presence of a select polar solvent accelerator. The select solvent accelerators which are utilized have the dual function of acting as both dispersing agents and curing accelerators. The instant invention herein includes the instant curing system, its use in a tyre sealant composition, the puncture-sealing layer formed of the cured composition and the puncture-sealing tyre.

According to the present invention, there is provided a curing system for curing an elastomer composition characterized by comprising at least one elastomeric synthetic or natural polymer containing at least 0.1 mole % unsaturation comprising:

a) 0.01 to 20 phr of at least one solid organic peroxide compound,

b) 0.01 to 10 phr of at least one quinoid vulcanization accelerator, and

c) 0.1 to 20 phr of a select polar solvent accelerator selected from water; primary, secondary and tertiary alcohols and polyols containing from one to twelve carbon atoms; aldehydes; alkyl nitriles and aromatic nitriles; acids and aqueous solutions of acids; bases and aqueous solutions of bases; esters; and dipolar, aprotic compounds.

The invention also provides a process for curing an elastomer composition comprising at least one elastomeric synthetic or natural polymer at a temperature ranging from 10°C to 200°C, typically 50 to 100°C, which comprises carrying out the curing in the presence of 0.01 to 20 parts by weight of at least one solid organic peroxide compound, 0.1 to 20 parts by weight of a select polar solvent accelerator selected from methanol, ethanol, propanol, butanol, n-hexanol, n-heptanol, n-octanol, cyclopentanol, 4-methyl cyclohexanol, t-amyl alcohol, benzyl alcohol, butanediol, an aqueous solution of sodium hydroxide, an aqueous solution of phosphoric acid, benzaldehyde, benzonitrile, acetic acid, dimethylacetamide, dimethylformamide, dimethyl sulfoxide and diethyl succinate, and 0.01 to 10 parts by weight of at least one quinoid vulcanization accelerator per 100 parts by weight of elastomer composition (phr).

The curing system of the present invention is especially advantageous as it can be utilized to cure rubber based systems at low temperatures ranging from 20°C to 100°C, preferably from 50°C to 100°C.

The polymers which can be utilized in the present invention are unsaturated and contain a minimum of 0.1 mole % unsaturation. Typically, these polymers have a mooney viscosity of at least 25 ($ML_4/100°C$). Representative useful elastomeric polymers include, but are not limited to: natural rubber, butyl rubber, ethylene-propylene terpolymer, polybutadiene, butadiene-styrene copolymers, butadiene-acrylonitrile copolymers, polyisoprene, isoprene-butadiene copolymers, hydrogenated or halogenated rubbers, and mixtures thereof.

The present invention relates to accelerated cure systems for these rubbers which utilize peroxide and quinoid curing agents which are solid or impregnated on solid fillers in conjunction with select polar solvent accelerators. In a preferred mode of the instant invention, the quinoid vulcanizing accelerator is mixed with the rubber masterbatch prior to sequential or concurrent addition of the peroxide curing agent and the select polar solvent accelerator. Alternatively the peroxide curing agent, quinoid vulcanizing agent and the select polar solvent can be added in any order or conjointly.

2

Typical organic peroxides which can be utilized in thh curing system of the ppesent invention include but are not limited to benzoyl peroxide, t-butyl peroxypivalate, 2,4 - dichloro - benzoyl peroxide, decanoyl peroxide, propionyl peroxide, hydroxyheptyl peroxide, cyclohexanone peroxide, 2,5 - dimethylhexyl - 2,5 - di(peroxybenzoate), t-butyl perbenzoate, dicumyl peroxide, 2,5 - dimethyl - 2,5 - di(t - butylperoxy)- hexyne - 3,2,5 - dimethyl - 2,5 - di(t - butylperoxy)hexane, 2,5 - dimethyl - 2,5 - di(benzoylperoxy)- hexane, di-t-butyl peroxide, p-menthane hydroperoxide, cumene hydroperoxide, 2,5 - dimethyl - 2,5 - di(hydroperoxy)hexane, t-butyl hydroperoxide, lauroyl peroxide, t-amyl perbenzoate, or mixtures thereof. Preferred organic peroxides are benzoyl peroxide and t-butyl perbenzoate. Mixtures of two or more of the above peroxides can also be used. Other useful peroxide curing agents are known to those skilled in the art.

It is usually desirable to support the peroxide curing agent on an inert filler or excipient material for reasons of safety and convenience in handling.

Typical excipient materials which can be utilized as solid supports for the above-identified peroxide curing agents include wheat starch bases and inorganic phosphate bases.

Typical commercially available supported peroxides which may be utilized in the instant invention include: Luperco AA® from Pennwalt Chemicals which is 32% benzoyl peroxide impregnated on a wheat starch base; and Luperco ACP® from Pennwalt Chemicals which is 35% benzoyl peroxide impregnated on an inorganic phosphate base. As is well known to those of skill in the art, peroxides such as those described above, should be handled with the upmost care whether they be pure, supported on inert filler or combined with polymer. The tendency of peroxides to decompose or react violently requires the exercise of care and skill in their use and the skilled artisan will thoroughly familiarize himself with their properties before employing them.

It is necessary to conjointly utilize a solid quinoid vulcanizing accelerator together with the peroxide curing agents. Suitable quinoid compounds include p-quinonedioxime, p-quinone dioxime diacetate, p-quinone dioxime dicaproate, p-quinone dioxime dilaurate, p-quinone dioxime distearate, p-quinone dioxime dicrotonate, p-quinone dioxime dinaphthenate, p-quinone dioxime succinate, p-quinone dioxime adipate, p-quinone dioxime difuroate, p-quinone dioxime dibenzoate, p-quinone dioxime di(o-chloro benzoate), p-quinone dioxime di-(p-chloro benzoate), p-quinone dioxime di-(p-nitro benzoate), p-quinone dioxime di-(m-nitro benzoate), p-quinone dioxime di-(3,5 dinitro benzoate), p-quinone dioxime di-(p-methoxy benzoate), p-quinone dioxime di-(n-amyl oxy benzoate), p-quinone dioxime di-(m-bromo benzoate), p-quinone dioxime di-(phenyl acetate), p-quinone dioxime di-cinnamate, p-quinone dioxime di-(n-phenyl carbamate), bis ethoxy methyl ether of quinone dioxime, mono-zinc salt of quinone dioxime, di-zinc salt of quinone dioxime, zinc chloride double salt of quinone dioxime, mono mercury salt of quinone dioxime, di-mercuric salt of quinone dioxime, mercuric chloride double salt of quinone dioxime, mono-barium chloride double salt of quinone dioxime, mono-cupric salt of quinone dioxime, mono-lead salt of quinone dioxime, mono-barium salt of quinone dioxime, mono-magnesium salt of quinone dioxime, mono-calcium salt of quinone dioxime, silver salt of p-quinone dioxime, 1,4-naphthoquinone dioxime, chloro methyl quinone dioxime, 2,6-dimethyl 1,4-quinone dioxime, 2-phenyl-1,4-quinone dioxime, 2-benzyl-1,4-quinone dioxime, 2-ethyl-1,4-quinone dioxime, thymo quinone dioxime, 2-chloro-p-quinone dioxime, thymo quinone dioxime dibenzoate, thymo quinone dioxime diacetate, p-quinone dioxime phosphochloride, and mixtures thereof.

The inert fillers or excipient materials consist of particules having an average maximum particle size of 50 µm. The preferred particle size of inert fillers for use in the instant invention are particles less than 10 µm, most preferably averaging between 1 and 5 µm in diameter. The solid peroxides and quinoids which are employed in the present invention each consist of particles having an average maximum particle size below 50 µm, preferably below 10 µm, and most preferably between 1 and 5 µm.

Additional vulcanizing and co-curing agents can additionally be incorporated into the rubber mix. Suitable vulcanizing and co-curing agents which can be utilized in the instant invention include but are not limited to: sulfur and sulfur-containing vulcanizing agents such as tetrathiuram disulfide and dipenta-methylene thiuram tetrasulfide; vulcanization accelerators such as thiuram compounds, dithioacid salts and thiazole compounds.

Typical amounts of peroxides utilized in the present invention are from 0.01 to 20, preferably from 0.5 to 10 phr. The total amount of vulcanization agents and/or co-curing agents which are generally used are amounts ranging from 0.01 to 20 phr. Quinoid compounds are typically utilized in amounts ranging from 0.01 to 10 phr. The select polar solvent accelerators described below in detail are typically used in amounts ranging from 0.1 to 20, preferably 0.5 to 5 phr.

In the present invention it is preferred that the peroxide curing compounds be either predispersed in a select polar solvent accelerator prior to incorporation into the rubber stock, or sequentially or conjointly added into the rubber masterbatch after the addition of the select polar solvent accelerator.

Suitable select polar solvent accelerators include but are not limited to: water (including aqueous solutions of acids and bases such as shown in Table 2), primary, secondary and tertiary alcohols and polyols such as aliphatic, cycloaliphatic and aromatic alcohols containing from one to twelve carbon atoms, for example, methanol, ethanol, propanol, butanol, n-octanol, n-heptanol, n-hexanol, iso-octanol, 2,2 - dimethyl - hexan - 6 - ol, t-amyl alcohol, 4-methyl cyclohexanol, benzyl alcohol butanediol, propylene glycol and ethylene glycol; such as ethyl methyl ketone and cyclohexanone; aldehyde such as benzaldehyde, acetaldehyde and propylaldehyde; alkyl and aromatic nitriles such as propylnitrile and benzonitrile; acids such as phosphoric acid, acetic acid and propionic acid; and bases such as NaOH; esters such as dimethyl succinate and diethyl succinate. Dipolar, aprotic compounds such as dialkyl formamides, dialkyl acetamides and dialkylsulfoxides such as dimethylsulfoxide are also useful. Mixtures of these accelerators can be utilized.

The curing system of the instant invention can be utilized in the formation of a puncture-sealing layer of a puncture-sealing tyre. This puncture-sealing layer is located on the inner surface of a tubeless tyre either on the innermost surface or between the carcass and another layer with the puncture-sealing layer consisting essentially of a cured composition formed from ingredients comprising:

(a) a network-forming amount of a network-forming polymer elastomer containing at least 0.1 mole % unsaturation,

(b) a tackifying amount of a primary tackifier polymer, preferably a liquid polybutene, having a number average molecular weight ranging from 500 to 5000,

(c) the curing system of the instant invention. For example, typical amounts of (a) and (b) are 100 pbw and at least 525 pbw, respectively.

The puncture-sealing tyre herein has a puncture-sealing layer which resists migration, provides a high degree of adhesion, and resists blow through.

The aforementioned cured composition can be produced independent of a tyre and sold to tyre manufacturers for use in the manufacture of puncture-sealing tyres. Moreover, the aforementioned ingredients can be sold in the form of a sealant system to tyre manufacturers who use the system to produce said cured composition.

Typical network-forming polymers include EPDM polybutadiene, hydrogenated polybutadiene, butyl rubber, halo butyl rubber (e.g. chloro- and bromo-), acrylonitrile-butadiene copolymer, styrene butadiene copolymer, natural rubber and cis-polyisoprene. Mixtures of two or more of the above polymers can also be used.

The primary tackifier polymers used in the invention are polymers of relatively low molecular weights ($\overline{Mn}$ about 500 to about 5000) which often, but not necessarily are liquid at room temperature (about 20°C.). Many structural types of polymers are useful including ethylene-propylene copolymer (EPC), ethylene-propylene-diene terpolymer, polybutadiene (PBD), hydrogenated PBD, butyl rubber (BR), polypropylene, acrylonitrile-butadiene copolymer (ANB), styrene-butadiene rubber (SBR), depolymerized natural rubber (DPR) and polybutenes. Because of their cost, availability and properties the polybutenes are particularly useful.

Such polybutenes preferably have a number average molecular weight exceeding 1000 as this has an effect on minimizing the possibility of its migration into adjacent tyre components. While the primary tackifier can be utilized in an amount of at least 300 phr, typically it is utilized in an amount ranging from 300 to 900 phr. It is preferably prepared by polymerizing an isobutylene rich stream with a metal halide catalyst and preferably has a polymer backbone structure resembling polyisobutylene. Very suitable polybutenes are available under the trademark Indopol®, e.g. Indopol H-300® and Indopol H-1900®, from Amoco. The manufacturer indicates that these Indopols have a polymer backbone structure resembling isobutylene and that Indopol H-300 has a viscosity ranging from 6.27 to 6.75 m²/s at 37.8°C (ASTM D-445) and Indopol H-1900 has a viscosity ranging from 40.69 to 43.82 m²/s at 37.8°C (ASTM D-445). The number average molecular weights ($\overline{Mn}$) of these materials are about 1290 to 2300, respectively, as determined by vapor pressure osmometry.

Additional ingredients for use in preparation of the sealant layer are disclosed in the application of DeTrano et al. titled "EPDM-Based Sealant Compositions and Puncture-Sealing Tyres Containing Same" filed concurrently herewith which is herein incorporated by reference.

Utilization of the instant improved rubber curing system is displayed in the following Examples 1 through 28.

Preparation of rubber masterbatch for examples

A butyl rubber masterbatch was formed from 15 parts by weight of a commercial grade of butyl rubber, 78 parts by weight of polyisobutylene containing 5 parts by weights of a commercially available aliphatic resin tackifier (Piccotac B-BHT®), 7 parts by weight of reinforcing grade carbon black, and 0.55 parts by weight of solid p-benzoquinonedioxime. Examination was made on the representative vulcanization system with or without various polar solvent vulcanization accelerators and peroxide curing agents in the following examples.

Examples 1 through 4 and control 5

Samples of the butyl rubber masterbatch were blended in a Brabender mixer operating at 60 rpm at a stock temperature at 35—40°C. Examples 1 through 4 shown in Table 1 display the effect of a select polar solvent, 1-octanol, upon the curing rate of the butyl rubber masterbatch further containing a peroxide curing agent. Control 5 is a comparative Example displaying the curing of the butyl rubber masterbatch with a peroxide curing agent in the absence of 1-octanol, the select polar solvent.

Examples 6—26

For each of the following Examples 6—26, 100 parts by weight of the butyl rubber masterbatch was

4

charged into a Brabender mixer operating at 60 rpm at ambient temperature. The rubber stock temperatures rose to between 35° and 40°C, during mixing. In Examples 6 through 22 a select polar solvent accelerator in an amount of 5.15 parts by weight was added to the rubber stock and mixed for three minutes. Thereafter 7.35 parts by weight of Luperco AA®, a peroxide curing agent, was sequentially added to the mixture of rubber and accelerator. The cure onset time, $T_1$, for each mixture was recorded in minutes as the time at which curing occurred after blending. The Brabender mixer registers the torque during mixing of the rubber composition in units of meter-grams. The time $T_2$ was then recorded at which the torque measurement increased by 100 meter-grams from the lowest torque measurement recorded during mixing of the rubber composition after the addition of both the peroxide curing agent and the select polar solvent accelerator.

The cure rate index, $T_2—T_1$, was calculated for each select polar solvent accelerator utilized. The results are demonstrated in Table 2.

Most of the cured rubber stocks produced in Examples 6 through 22 were given a hot flow test, the results of which are displayed in Table 2. In all hot flow tests, a 0.5 to 0.55 gram sample of cured rubber stock was placed on acetone-cleaned, microscope slide inclined at an angle of 30°. The distance which the test stock flowed down the glass slide after two hours at 150°C was measured in millimeters. These samples were not post heated and the results are listed in Table 2 under "After Mixing" as the samples were directly removed from the Brabender mixer. Similarly a 0.5 to 0.55 gram sample of each cured rubber stock was post heated for 30 minutes at 80°C in an oven and given the same flow test. The results of this test are shown in Table 2 under the column heading "Post Heated".

Examples 23 through 26 shown in Table 3 display the use of polar solvents which cannot be utilized in the present invention as the Brabender tests displayed a rate cure index greater than 6.0. Plus signs after number in Table 3 display that no further measurements were taken after that time or distance.

TABLE 1

| Example No. | Butyl rubber master batch parts by weight | Peroxide curing agent parts by weight | 1-Octanol[3] parts by weight | Cure onset time (minutes) | $V_R{}^{(4)} \times 10^2$ measured after minutes at 80°C post curing | | | |
|---|---|---|---|---|---|---|---|---|
| | | | | | Initial mixing | 15 min. | 30 min. | 60 min. |
| 1 | 100 | 7.35[1] | 5.15 | 5 | 1.22 | 1.39 | 1.14 | 1.12 |
| 2 | 100 | 7.1 [2] | 5.15 | 4 | 1.42 | 1.57 | 1.19 | 1.20 |
| 3 | 100 | 7.1 [2] | 2.58 | 6.5 | 1.13 | 1.07 | 1.20 | 1.11 |
| 4 | 100 | 7.1 [2] | 1.29 | 9 | 0.48 | 0.90 | 0.89 | 0.83 |
| Control 5 | 100 | 7.1 [2] | none | 28 +[5] | Dissolved[6] | Dissolved[6] | Dissolved[6] | Dissolved[6] |

[1]32% benzoyl peroxide with wheat starch excipients (Pennwalt Chemicals)
[2]35% benzoyl peroxide with calcium phosphate excipients (Pennwalt Chemicals)
[3]Alfol 8® (Conoco Chemicals)
[4]Crosslink density, i.e. volume fraction of rubber remaining in the swollen sample
[5]No curing displayed after 28 minutes
[6]Sample did not cure and therefore dissolved in solvent

TABLE 2

| Example No. | Select polar solvents | Brabender plasticorder response | | | Hot flow test | |
|---|---|---|---|---|---|---|
| | | $T_1$ | $T_2$ | $T_2-T_1$ | After mixing | Post heated |
| 6 | Dimethylformamide | 0.4 | 1.3 | 0.9 | No Flow | No Flow |
| 7 | Dimethylacetamide | 0.7 | 1.4 | 0.7 | No Flow | No Flow |
| 8 | Acetic Acid | 1.2 | 1.9 | 0.7 | No Flow | No Flow |
| 9 | Dimethylsulfoxide | 1.5 | 2.6 | 1.1 | No Flow | 0.50 |
| 10 | Benzyl Alcohol | 1.0 | 2.2 | 1.2 | 0.50 | 0.62 |
| 11 | Benzonitrile | 6.2 | 9.9 | 3.7 | 0.25 | 0.32 |
| 12 | Butanediol | 3.5 | 6.2 | 2.7 | 0.67 | 1.62 |
| 13 | 1% Sodium Hydroxide[1] | 6.7 | 9.7 | 3.0 | Not Tested | Not Tested |
| 14 | 1% Phosphoric Acid[1] | 6.2 | 9.9 | 3.7 | Not Tested | Not Tested |
| 15 | t-Amyl Alcohol | 6.0 | 10.7 | 4.7 | 0.94 | 1.46 |
| 16 | 4-Methyl Cyclohexanol | 6.0 | 11.5 | 5.5 | 0.94 | 1.23 |
| 17 | Benzaldehyde | 6.5 | 10.5 | 4.5 | 1.00 | 1.92 |
| 18 | Diethylsuccinate | 6.5 | 12.0 | 5.5 | 0.87 | 1.00 |
| 19 | Water[1] | 7.5 | 11.5 | 4.0 | Not Tested | Not Tested |
| 20 | Water | 7.0 | 12.0 | 5.0 | Not Tested | Not Tested |
| 21 | 1-Octanol | 6.7 | 11.9 | 5.2 | 1.00 | 1.00 |
| 22 | 42.5% Phosphoric Acid[1] | 9.0 | 13.5 | 4.5 | Not Tested | Not Tested |

[1]Accelerator present at the 0.74 wt. percent level

TABLE 3

| Example No. | Select polar solvent | Brabender plasticorder response | | | Hot flow test | |
|---|---|---|---|---|---|---|
| | | $T_1$ | $T_2$ | $T_2-T_1$ | After mixing | Post heated |
| 23 | Dodecylmercaptan | 2.5 | 20[+] | 20[+] | 1.00 | 1.23 |
| 24 | Nitrobenzene | 9.5 | 18.0 | 8.5 | 1.19 | 1.31 |
| 25 | Dimethylaniline | 20[+] | — | — | 3[+] | 3[+] |
| 26 | None | 20[+] | — | — | Not Tested | Not Tested |

The following Examples 27 and 28 display the utilization of the instant curing system in the preparation of a puncture-sealing layer of a puncture-sealing tyre.

7

**0 144 643**

| | Example 27 | Example 28 |
|---|---|---|
| EPDM (EPsyn 55®) | 15 | 15 |
| Polybutene (Indopol H-1900®) | 85 | 50.5 |
| Polybutene (Indopol H-300®) | — | 29 |
| Resin Tackifier (Piccotac B-BHT®) | — | 5.5 |
| Carbon Black (N-326) | 5 | 5 |
| p-benzoquinonedioxime | 1 | 1 |
| Peroxide Catalyst consisting by weight of 50% Luperco AA®, 17.3% n-octanol, and 32.7% Indopol H-300® | 14.4 | 14.4 |

These compositions were prepared as follows: A masterbatch of the EPDM, 5 parts of the Indopol® H-1900, the carbon black and the p-benzoquinonedioxime was prepared in a Brabender Plasticorder operating at 60°C and 60 rpm. The resultant mix was then worked on a two-roll mill. The batch was then solution blended in hexane with the remainder of the polybutene and other tackifier (if any) and was subsequently stripped of solvent in a vacuum oven to produce a dried material. The Peroxide Catalyst was then added to the dried material in the Brabender Plasticorder at 60 rpm with no external heat. Samples were then oven cured at 80°C for 15—30 minutes.

The above compositions were evaluated for their ability to adhere to a metal surface (as might be encountered in the tyre by a puncturing nail). Using an Instron Tensile Tester fitted with fixtures designed for the test, the steel probe of the Tester was brought against the surface of a 4.57 mm thick sheet of sealant composition and held at predetermined loading for a specified time before being pulled away from the surface at the various rates as specified below. The energy expanded in separating the probe from the sealant was measured and recorded. The data are reported below (wherein the separation rate is in terms of speed of the Instron crosshead and the separation energy is in joules, with greater adhesion being indicated by greater separation energy).

| | Separation rate | | | | | |
|---|---|---|---|---|---|---|
| | 5.08 cm/minute | | | | 50.80 cm/minute | |
| Compressive load, kg | 0.23 | 0.45 | 1.36 | 2.27 | 0.45 | 2.27 |
| Example 27 | .25 | .21 | .33 | .41 | .51 | 1.05 |
| Example 28 | .39 | .30 | .53 | .70 | .68 | 1.61 |

The above data indicates superior adhesion-to-metal characteristics and is significantly better than is obtained on testing of a commercially available sealant composition.

The aforementioned cured material is readily pressed against a tyre inside wall to fix it in place to form a puncture-sealing tyre with a puncture-sealing layer with excellent adherence properties and resistance to migration. Typically, the sealant is used to protect the crown area of the tyre (i.e., the area in back of the tread from shoulder to shoulder). In some cases, it can extend from the middle portion of one of the side walls to the middle portion of the other. In extreme cases, the sealant material can extend from bead to bead on the inner surface of the tyre.

The compositions of Examples 27 and 28 also demonstrate excellent resistance to migration, puncture filling properties and resistance to blow through after filling and sealing.

Good results are also obtained when up to 70% of the EPDM is replaced by one or more other network-forming polymers, e.g. polybutadiene, hydrogenated polybutadiene, butyl rubber, halo butyl rubber, acrylonitrile-butadiene copolymer, styrene butadiene copolymer, natural rubber, and cis-polyisoprene.

Good results are also obtained when the polybutene is replaced with other low molecular weight ($\overline{Mn}$ of about 500 to 5000) tackifiers such as ethylene-propylene copolymer, ethylene-propylene-diene terpolymer, polybutadiene, hydrogenated polybutadiene, butyl rubber, polypropylene, acrylonitrile-butadiene copolymer, styrene-butadiene rubber and depolymerized natural rubber.

This invention and compositions made according to it find use in many applications where elastomeric

8

compositions are cured, particularly in situ. Specific areas of use besides tyre sealants used to coat the insides of puncture self-sealing vehicle tyres include roofing compounds and caulking compositions. Other areas of utility will be apparent to those skilled in the art upon careful study of this specification.

## Claims

1. A curing system for curing an elastomer composition characterized by comprising at least one elastomeric synthetic or natural polymer containing at least 0.1 mole % unsaturation comprising:
   a) 0.01 to 20 phr of at least one solid organic peroxide compound,
   b) 0.01 to 10 phr of at least one quinoid vulcanization accelerator, and
   c) 0.1 to 20 phr of a selected polar solvent accelerator selected from water; primary, secondary and tertiary alcohols and polyols containing from one to twelve carbon atoms; aldehydes; alkyl nitriles and aromatic nitriles; acids and aqueous solutions of acids; bases and aqueous solutions of bases; esters; and dipolar, aprotic compounds.

2. The curing system according to Claim 1, wherein the select polar solvent accelerator is selected from methanol, ethanol, propanol, butanol, n-hexanol, n-heptanol, n-octanol, cyclopentanol, 4-methyl cyclohexanol, t-amyl alcohol, benzyl alcohol, butanediol, an aqueous solution of sodium hydroxide, an aqueous solution of phosphoric acid, benzaldehyde, benzonitrile, acetic acid, dimethylacetamide, dimethylformamide, dimethyl sulfoxide and diethyl succinate.

3. The curing system according to Claim 1, comprising 0.5 to 10 phr of at least one solid organic peroxide.

4. The curing system according to Claim 1, comprising 0.5 to 5 phr of at least one select polar solvent accelerator.

5. The curing system according to Claim 1, wherein the elastomer composition is selected from natural rubber, butyl rubber, ethylene-propylene terpolymer, polybutadiene, butadiene-styrene copolymers, butadiene-acrylonitrile copolymers, polyisoprene, isoprenebutadiene copolymers, hydrogenated or halogenated rubbers, and mixtures thereof.

6. A cured elastomer system comprising:
   a) 100 parts by weight network-forming polymer elastomer comprising at least 30 weight percent ethylene-propylene-diene terpolymer elastomer,
   b) at least 525 parts by weight of a primary tackifier polymer having a number average molecular weight ranging from 500 to 5,000, and
   c) the curing system of Claim 1.

7. A sealant system for use in providing a puncture-sealing layer in a tubeless tyre comprising the curing system of Claim 1.

8. A tubeless tyre provided on its inner surface with a puncture-sealing layer consisting of a cured composition formed from ingredients comprising the curing system of Claim 1.

9. A method of curing an elastomeric composition at a temperature ranging from 20°C to 100°C, characterized by mixing with said elastomeric composition 0.01 to 10 phr of at least one quinoid vulcanization accelerator, and subsequently adding 0.01 to 20 phr of at least one solid organic peroxide compound, and 0.1 to 20 phr of a select polar solvent accelerator selected from water; primary, secondary and tertiary alcohols and polyols containing from one to twelve carbon atoms; aldehydes; alkyl nitriles and aromatic nitriles; acids and aqueous solutions of acids; bases and aqueous solutions of bases; esters; and dipolar, aprotic compounds; to promote curing.

10. The method according to Claim 9, wherein the elastomer composition is selected from natural rubber, butyl rubber, ethylene-propylene terpolymer, polybutadiene, butadiene-styrene copolymers, butadiene-acrylonitrile copolymers, polyisoprene, isoprenebutadiene copolymers, hydrogenated or halogenated rubbers, and mixtures thereof.

11. The method according to Claim 9 wherein the select polar solvent accelerator is selected from methanol, ethanol, propanol, butanol, n-hexanol, n-heptanol, n-octanol, cyclopentanol, 4-methyl cyclohexanol, t-amyl alcohol, benzyl alcohol, butanediol, an aqueous solution of sodium hydroxide, an aqueous solution of phosphoric acid, benzaldehyde, benzonitrile, acetic acid, dimethylacetamide, dimethyl formamide, dimethyl sulfoxide and diethyl succinate.

## Patentansprüche

1. Vulkanisationssystem für die Vulkanisation einer Elastomermasse, dadurch gekennzeichnet, daß es mindestens ein elastomeres synthetisches oder natürliches Polymeres, das mindestens 0,1 Mol-% Unsättigung enthält, enthält und daß es
   a) 0,01 bis 20 phr von mindestens einer festen organischen Peroxidverbindung,
   b) 0,01 bis 10 phr von mindestens einem Chinoid-Vulkanisationsbeschleuniger und
   c) 0,1 bis 20 phr eines ausgewählten polaren Lösungs-mittel-Beschleunigers, ausgewählt aus Wasser; primären, sekundären und tertiären Alkoholen und Polyolen, enthaltend 1 bis 12 Kohlenstoffatome; Aldehyden; Alkylnitrilen und aromatischen Nitrilen, Säuren und wäßrigen Lösungen von Säuren; Basen und wäßrigen Lösungen von Basen; Estern; und dipolaren aprotischen Verbindungen, enthält.

9

2. Vultanisationssystem nach Anspruch 1, dadurch gekennzeichnet, daß der ausgewählte polare Lösungsmittel-Beschleuniger aus Methanol, Ethanol, Propanol, Butanol, n-Hexanol, n-Heptanol, n-Octanol, Cyclopentanol, 4-Methylcyclohexanol, t-Amylalkohol, Benzylalkohol, Butandiol, einer wäßrigen Lösung von Natriumhydroxid, einer wäßrigen Lösung von Phosphorsäure, Benzaldehyd, Benzonitril, Essigsäure, Dimethylacetamid, Dimethylformamid, Dimethylsulfoxid und Diethylsuccinat ausgewählt ist.

3. Vulkanisationssystem nach Anspruch 1, dadurch gekennzeichnet, daß es 0,5 bis 10 phr von mindestens einem festen organischen Peroxid enthält.

4. Vulkanisationssystem nach Anspruch 1, dadurch gekennzeichnet, daß es 0,5 bis 5 phr von mindestens einem ausgewählten polaren Lösungsmittel-Beschleuniger enthält.

5. Vulkanisationssystem nach Anspruch 1, dadurch gekennzeichnet, daß die Elastomermasse aus Naturkautschuk, Butylkautschuk, Ethylen-Propylen-Terpolymerem, Polybutadien, Butadien-Styrol-Copolymeren, Butadien-Acrylnitril-Copolymeren, Polyisopren, Isoprenbutadien-Copolymeren, hydrierten oder halogenierten Kautschuken und Gemischen davon ausgewählt ist.

6. Vulkanisiertes Elastomersystem, dadurch gekennzeichnet, daß es

a) 100 Gew.-Teile eines netzwerkbildenden polymeren Elastomeren, enthaltend mindestens 30 Gew.-% Ethylen-Propylen-Dien-Terpolymerelastomeres,

b) mindestens 525 Gew.-Teile eines primären Klebrigmacher-Polymeren mit einem zahlenmittleren Molekulargewicht im Bereich von 500 bis 5000 und

c) das Vulkanisationssystem nach Anspruch 1 enthält.

7. Dichtungsmittelsystem zur Verwendung beim Erhalt einer Reifenpannen-Dichtungsschicht in einem schlauchlosen Reifen, dadurch gekennzeichnet, daß es das Vulkanisationssystem nach Anspruch 1 enthält.

8. Schlauchloser Reifen, dadurch gekennzeichnet, daß er auf seiner inneren Oberfläche mit einer reifenpanneabdichtenden Schicht versehen ist, welche aus einer vulkanisierten Masse besteht, die aus den Bestandteilen des Vulkanisationssystems nach Anspruch 1 gebildet worden ist.

9. Verfahren zum Vulkanisieren einer Elastomermasse bei einer Temperatur im Bereich von 20°C bis 100°C, dadurch gekennzeichnet, daß man mit der Elastomermasse 0,01 bis 10 phr mindestens eines Chinoid-Vulkanisationsbeschleunigers vermischt und danach 0,01 bis 20 phr von mindestens einer festen organischen Peroxidverbindung und 0,1 bis 20 phr eines ausgewählten polaren Lösungsmittel-Beschleunigers, ausgewählt aus Wasser; primären, sekundären und tertiären Alkoholen und Polyolen mit 1 bis 12 Kohlenstoffatomen; Aldehyden; Alkylnitrilen und aromatischen Nitrilen; Säuren und wäßrigen Lösungen von Säuren; Basen und wäßrigen Lösungen von Basen; Estern; und dipolaren aprotischen Verbindungen, zusetzt, um die Vulkanisation zu beschleunigen.

10. Verfahren nach Anspruch 9, dadurch gekennzeichnet, daß die Elastomermasse aus der Gruppe Naturkautschuk, Butylkautschuk, Ethylen-Propylen-Terpolymere, Polybutadien, Butadien-Styrol-Copolymere, Butadien-Acrylnitril-Copolymere, Polyisopren, Isoprenbutadien-Copolymere, hydrierte oder halogenierte Kautschuke und Gemischen davon ausgewählt ist.

11. Verfahren nach Anspruch 9, dadurch gekennzeichnet, daß der ausgewählt polare Lösungsmittel-Beschleuniger aus der Gruppe Methanol, Ethanol, Propanol, Butanol, n-Hexanol, n-Heptanol, n-Octanol, Cyclopentanol, 4-Methylcyclohexanol, t-Amylalkohol, Benzylalkohol, Butandiol, einer wäßrigen Lösung von Natriumhydroxid, einer wäßrigen Lösung von Phosphorsäure, Benzaldehyd, Benzonitril, Essigsäure, Dimethylacetamid, Dimethylformamid, Dimethylsulfoxid und Diethylsuccinat ausgewählt ist.

**Revendications**

1. Système vulcanisant destiné à la vulcanisation d'une composition élastomérique, caractérisé par la présence d'au moins un polymère élastomérique synthétique ou naturel contenant au moins 0,1 mole % de non-saturation, comprenant:

a) 0,01 à 20 parties, pour 100 parties de caoutchouc, d'au moins un peroxyde organique solide,

b) 0,01 à 10 parties, pour 100 parties de caoutchouc, d'au moins un accélérateur quinonique de vulcanisation, et

c) 0,1 à 20 parties, pour 100 parties de caoutchouc, d'un accélérateur-solvent polaire sélectionné choisi entre l'eau; des alcools et polyols primaires, secondaires et tertiaires contenant 1 à 12 atomes de carbone; des aldéhydes; des nitriles alkyliques et des nitriles aromatiques; des acides et des solutions aqueuses d'acides; des bases et des solutions aqueuses de bases; des esters; et des composés aprotiques dipolaires..

2. Système vulvanisant suivant la revendication 1, dans lequel l'accélérateur-solvent polaire sélectionné est choisi entre le méthanol, l'éthanol, le propanol, le butanol, le n-hexanol, le n-heptanol, le n-octanol, le cyclopentanol, le 4-méthylcyclohexanol, l'alcool tertio-amylique, l'alcool benzylique, le butanediol, une solution aqueuse d'hydroxyde de sodium, une solution aqueuse d'acide phosphorique, le benzaldéhyde, le benzonitrile, l'acide acétique, le diméthylacétamide, le diméthylformamide, le diméthylsulfoxyde et le succinate de diéthyle.

3. Système vulcanisant suivant la revendication 1, comprenant 0,5 à 10 parties, pour 100 parties de caoutchouc, d'au moins un peroxyde organique solide.

4. Système vulcanisant suivant la revendication 1, comprenant 0,5 à 5 parties, pour 100 parties de caoutchouc, d'au moins un accélérateur-solvent polaire sélectionné.

5. Système vulcanisant suivant la revendication 1, dans lequel la composition élastomerique est choisie entre le caoutchouc naturel, le caoutchouc butyle, un terpolymère éthylène-propylène, un polybutadiène, des copolymères butadiène-styrène, des copolymères butadiène-acrylonitrile, un polyisoprène, des copolymères isoprène-butadiène, des caoutchoucs hydrogénés ou halogénés et leurs mélanges.

6. Système élastomérique vulcanisé, comprenant:

a) 100 parties en poids d'un élastomère polymérique formant un réseau, comprenant au moins 30 parties en poids d'élastomère terpolymérique éthylène-propylèns-diène.

b) au moins 525 parties en poids d'un polymère primaire d'adhésivité ayant une moyenne en nombre du poids moléculaire de 500 à 5000, et

c) le système vulcanisant de la revendication 1.

7. Système obturateur destiné à être utilisé pour réaliser une couche obturant une perforation dans un bandage sans chambre, comprenant le système vulcanisant de la revendication 1.

8. Bandage pneumatique sand chambre, portant sur sa surface interne une couche obturatrice de perforations consistant en une composition vulcanisée formée à partir d'ingrédients comprenant le système vulcanisant suivant la revendication 1.

9. Procédé de vulcanisation d'une composition élastomérique à une température allant de 20 à 100°C, caractérisé par le mélange uvec ladite composition élastomérique, de 0,01 à 10 parties, pour 100 parties de caoutchouc, d'au moins un accélérateur quinonique de vulcanisation, puis l'addition de 0,01 à 20 parties, pour 100 parties de caoutchouc, d'au moins un composé peroxydique organique solide et de 0,1 à 20 parties, pour 100 parties de caoutchouc, d'un accélérateur-solvant polaire sélectionné choisi entre l'eau; des alcools et polyols primaires, secondaires et tertiaires contenant 1 à 12 atomes de carbone; des aldéhydes; des nitriles alkyliques et des nitriles aromatiques; des acides et des solutions aqueuses d'acides; des bases et des solutions aqueuses de bases; des esters; et des composés aprotiques dipolaires; pour favoriser la vulcanisation.

10. Procédé suivant la revendication 9, dans lequel la composition élastomérique est choisie entre le caoutchouc naturel, le caoutchouc butyle, un terpolymère éthylène-propylène, un polybutadiène, des copolymères butadiène-styrène, des copolymères butadiène-acrylonitrile, un polyisoprène, des copolymères isoprène-butadiène, des caoutchoucs hydrogénés ou halogénés, et leurs mélanges.

11. Procédé suivant la revendication 9, dans lequel l'acélérateur-solvant polaire sélectionné est choisi entre le méthanol, l'éthanol, le propanol, le butanol, le n-hexanol, le n-heptanol, le n-octanol, le cyclopentanol, le 4-méthylcyclohexanol, l-alcool tertio-amylique, l'alcool benzylique, le butanediol, une solution aqueuse d'hydroxyde de sodium, une solution aqueuse d'acide phosphorique, le benzaldéhyde, le benzonitrile, l'acide acétique, le diméthylacétamide, le diméthylformamide, le diméthylsulfoxyde et le succinate de diéthyle.